# EUROPÄISCHE PATENTANMELDUNG

(11) **EP 1 752 661 A1**
(43) Veröffentlichungstag der Anmeldung: **14.02.2007**
(21) Anmeldenummer: 06016791.3
(22) Anmeldetag: 11.08.2006
(51) Int. Cl.: F03G 7/06

(54) **Formgedächtnislegierungsdrehaktuator**

(30) Priorität: 11.08.2005 DE 102005038330; 10.12.2005 DE 102005059081; 29.05.2006 DE 102006025202
(71) Anmelder: Alfmeier Präzision AG Baugruppen und Systemlösungen, 91757 Treuchtlingen (DE)
(72) Erfinder: Garscha, Markus, 91781 Weissenburg (DE); Auernhammer, Helmut, 91798 Höttingen (DE); Engelhardt, Klaus, 91781 Weissenburg (DE)
(74) Vertreter: Mörtel & Höfner

(57) **Zusammenfassung**

Ein Drehaktuator (1) enthält ein um eine Drehachse (4) drehbar gelagertes Abtriebselement (2) und mindestens ein erstes (6a) und zweites (6b) am Abtriebselement (2) angreifendes Zugelement aus Formgedächtnislegierungen, wobei die vom ersten (6a) und zweiten (6b) Zugelement am Abtriebselement (2) bei ihrer Kontraktion (8a,b) erzeugten Drehmomente entgegengesetzte Drehrichtungen (14a,b) bezüglich der Drehachse (4) aufweisen.

## Beschreibung

Die Erfindung betrifft einen Drehaktuator mit einem Zugelement aus einer Formgedächtnislegierung.

Die Verwendung von Formgedächtnislegierungen (Shape-Memory-Alloy, SMA), insbesondere in Drahtform, gewinnt in der Aktuatortechnik immer mehr an Bedeutung, da diese einfach, kostengünstig und flexibel zur Erzeugung von Zugkräften eingesetzt werden können. Wird ein Draht aus einer Formgedächtnislegierung von elektrischem Strom durchflossen, so steigt aufgrund seines inneren Widerstands die Temperatur an. Ab einer bestimmten Grenztemperatur, welche auch als Schalttemperatur bezeichnet wird, beginnt eine Strukturänderung der Legierung und das Metall verformt sich hinsichtlich der Länge des Drahtes, d.h. es kontrahiert sich. Der Draht erzeugt hiermit eine Zugkraft.

Wird keine weitere Energie bzw. Wärme mehr zugeführt, so fällt die Temperatur im Draht wieder ab, z.B. durch Wärmeaustausch mit der Umgebung. Der Draht behält zwar, wenn keine äußeren Zugkräfte auf ihn einwirken, seine verkürzte Länge, kann jedoch z.B. mittels einer Feder in die Ausgangsform bzw. Grundform, also seine ursprüngliche Länge zurückgebracht bzw. zurückgedehnt werden. Die Kraft zur Rückdehnung in die Grundform im abgekühlten Zustand ist hierbei kleiner als die vom Draht im beheizten Zustand erzeugte Zugkraft. Aufgrund der Längenkontraktion des Drahtes bei Erwärmung werden Formgedächtnislegierungen in Drahtform in der Regel als Erzeuger einer Linearkraft, nämlich Zugkraft, eingesetzt.

Beispielsweise aus der US 2004/0112049 A1 ist es darüber hinaus bekannt, mit Hilfe eines SMA-Drahtes, einer Umlenkrolle und einer Rückstellfeder einen bidirektionalen Drehaktuator herzustellen, der also anstelle einer linearen Kraft bzw. Linearverschiebung ein Drehmoment bzw. eine Drehbewegung an seinem Abtriebselement, z.B. einer Welle, erzeugt. Der SMA-Draht erzeugt hierbei nach wie vor eine lineare Kontraktionsbewegung, die jedoch durch hebelartigen Angriff an einer Welle in ein Drehmoment umgesetzt wird, welches den Aktuator bzw. die Welle in eine bestimmte Drehrichtung rotiert. Über eine entsprechende Rückstellfeder, welche ein entgegengesetztes Drehmoment an der Welle erzeugt, wird der Drehaktuator in die entgegengesetzte Drehrichtung bewegt, sobald, wie oben beschrieben, die Temperatur des Drahtes absinkt und sich dieser durch die Federkraft wieder dehnen lässt.

Bei dem bekannten Drehaktuator auf SMA-Basis kann durch kontinuierliche Verkürzung des SMA-Drahtes eine kontinuierliche Positionierung, d.h. eine beliebige Winkelstellung der Welle erreicht bzw. angefahren werden. Um eine bestimmte Winkelposition des Drehaktuators zu erhalten, muss jedoch dauernd Strom im SMA-Draht zugeführt werden, um die Temperatur zur Strukturverformung in diesem zu erzeugen und eine gewisse Länge des Drahtes bzw. Verkürzung des Drahtes aufrecht zu erhalten. Wird der Strom abgeschaltet, kühlt der Draht aus, und die Rückstell-Federanordnung zieht den Draht wieder in seine ursprüngliche Länge, was zu einer Rückverdrehung der Welle in die Ausgangsposition führt. Die Drehposition der Welle wird also durch das Drehmoment- bzw. Kräftegleichgewicht von SMA-Draht, Rückstellfeder und äußerem Drehmoment bestimmt. Bei einer Unterbrechung der Energiezufuhr, z.B. einem Stromausfall, findet durch die Feder eine eventuell ungewollte Rückstellung des Aktuators statt.

Aufgabe der Erfindung ist es, einen verbesserten bidirektionalen Drehaktuator auf Basis von Formgedächtnislegierungen anzugeben.

Die Aufgabe wird gelöst durch einen Drehaktuator mit einem um eine Drehachse drehbar gelagerten Abtriebselement. Der Drehaktuator enthält ein erstes und zweites, jeweils aus einer Formgedächtnislegierung bestehenden Zugelement. In der Regel bestehen beide Zugelemente aus ein und derselben Formgedächtnislegierung, was aber nicht zwangsläufig so sein muss. Erstes und zweites Zugelement greifen am Abtriebselement an, d.h. bewirken bei ihrer Kontraktion aufgrund Erwärmung über den SMA-Effekt eine Zugkraft am Abtriebselement. Da das Abtriebselement drehbar gelagert ist, bewirkt jede Zugkraft wiederum ein Drehmoment am Abtriebselement. Erstes und zweites Zugelement sind dabei so mit dem Abtriebselement kraftschlüssig verbunden, dass jedes für sich bei seiner Kontraktion ein Drehmoment am Abtriebselement bezüglich der Drehachse bewirkt, wobei jedoch die von den beiden Zugelementen verursachten Drehmomente hierbei entgegengesetzte Richtung besitzen, wenn sich die Zugelemente jeweils kontrahieren.

Natürlich können auch mehrere Zugelemente vorgesehen sein, von denen einige das Abtriebselement in die eine und die restlichen dieses in die andere Richtung drehen. Mindestens ist jedoch ein Zugelement für jede der beiden Drehrichtungen erforderlich. Mehrere Zugelemente müssen hierbei nicht an der gleichen Stelle des Abtriebselements angreifen. Das Abtriebselement,kann eine Rolle, ein Hebel oder ein sonstiges beliebiges Element sein.

Erstes und zweites Zugelement können auch als ein einstückiges SMA-Element, z.B. als SMA-Draht, ausgeführt sein, welches z.B. sowohl jeweils endseitig als auch mittig insgesamt drei elektrische Kontaktierungen aufweist. Im Bereich der mittigen Kontaktierung ist der SMA-Draht dann z.B. um eine Umlenkrolle als Abtriebselement geschlungen und dort auch elektrisch kontaktiert. Beide vom Abtriebselement wegführenden Abschnitte des SMA-Drahtes können dann getrennt voneinander zwischen der Mittenkontaktierung und dem jeweiligen Drahtende bestromt und damit erwärmt und kontrahiert werden. Der einstückige SMA-Draht bildet somit zwei getrennt voneinander ansteuerbare Zugelemente.

Wie bereits erwähnt, kann ein Zugelement nur in einer Richtung, nämlich der Kontraktionsrichtung, aktiv eine Kraft erzeugen und somit als Aktuator wirken. Durch die erfindungsgemäße Maßnahme, nämlich im Drehaktuator mindestens zwei Zugelemente vorzusehen, welche bei ihrer Kontraktion entgegengesetzte Drehmomente am Abtriebselement erzeugen, kann jedoch das Abtriebselement in beide Drehrichtungen bezüglich der Drehachse jeweils durch Kontraktion des einen oder anderen Zugelementes bewegt werden. Beide Drehrichtungen des Drehaktuators werden also aktiv durch Drehmoment bzw. Krafterzeugung eines Zugelementes aus SMA hervorgerufen. Ein Rückstellelement z.B. in Form einer Feder, welches das Abtriebselement entgegen der Kraft bzw. der Drehrichtung eines einzigen Zugelementes wieder zurückdreht, ist somit überflüssig. Mit anderen Worten wird die aus dem Stand der Technik bekannte Rückstellfeder durch ein SMA-Element ersetzt.

Ein weiterer Vorteil ergibt sich, da bei Nichtbestromung bzw. -erwärmung der Zugelemente keines dieser eine Zugkraft entwickelt. Somit erfahren die Zugelemente auch keine Rückstellkraft wie z.B. durch die Rückstellfeder gemäß Stand der Technik. Sie behalten ihre augenblickliche Länge bei. Das Abtriebselement verbleibt somit in seiner aktuellen Drehstellung ohne sich selbsttätig bzw. durch Federwirkung in eine Ausgangslage zurückzustellen, zumindest solange kein Fremddrehmoment von außen auf den Drehaktuator einwirkt, das die Rückdehnkraft eines Zugelements überwindet. Zum Aufrechterhalten einer aktuellen bzw. einmal erreichten Drehposition muss im Gegensatz zum Stand der Technik das Zugelement also nicht weiter bestromt werden. Der Drehaktuator arbeitet daher auch wesentlich stromsparender.

Außerdem ist es beim erfindungsgemäßen Drehaktuator möglich, durch gleichzeitige Bestromung und damit Krafterzeugung durch beide Zugelemente gleichzeitig zwei entgegengesetzte Drehmomente am Abtriebselement zu erzeugen. Somit entsteht am Abtriebselement ein Haltemoment, welches von außen am Abtriebselement angreifenden Kräften bzw. Drehmomenten entgegenwirkt. Der Drehaktuator setzt also einer äußeren auf ihn einwirkenden Kraft bzw. einem Drehmoment ein Haltemoment entgegen und verbleibt in seiner aktuellen Drehposition. Das Haltemoment ist hierbei deutlich größer als das oben erwähnte Rückstellmoment im unbestromten Zustand.

Andererseits kann es erwünscht sein, eine gewissen Freigängigkeit des Drehaktuators zu erreichen. Hierzu wird keines der beiden Zugelemente bestromt, weshalb einer Fremdverstellung des Abtriebselements von außen lediglich das Rückstellmoment des dabei zu dehnenden Zugelements entgegengesetzt ist. Ist dieses klein genug, kann das Abtriebselement somit von außen im Rahmen der Dehngrenzen der Zugelemente verstellt werden, wobei der Drehaktuator diesem lediglich eine bekannte Gegenkraft, nämlich die Rückstellkraft des SMA-Elements, entgegensetzt. Somit zeigt der Drehaktuator alleine durch Nichtbestromung der Zugelemente ein Verhalten nach Art einer integrierten Rutschkupplung.

Zum Erzeugen einer Drehbewegung des Abtriebselements wird also in der Regel nur ein einziges bzw. ein oder mehrere in die gleiche Drehrichtung am Abtriebselement wirkende Zugelemente bestromt. Diese bewirken dann bei Kontraktion die erwünschte Drehbewegung in die erwünschte Richtung. Da die Kontraktion des Zugelementes innerhalb eines Temperaturfensters kontinuierlich stattfindet, kann über die Heiztemperatur die Kontraktion und somit die Drehposition des Abtriebselements bzw. die Größe des von ihm abgegebenen Drehmoments bestimmt werden. Die Heiztemperatur des Zugelements wird hier durch die Menge an Zuführung elektrischer Energie, z.B. die Stromstärke im Zugelement, bestimmt.

Sofern die Beheizung der Zugelemente aus SMA-Material durch Stromfluss in deren Innerem erfolgt, sind erstes und zweites Zugelement voneinander elektrisch isoliert. So können sie mit unterschiedlichen Ströme bestromt und damit unterschiedlich aufgeheizt werden, um unterschiedliche Zugkräfte zu erzeugen. Somit sind mehrere Kombinationen von Erwärmung und damit Kontraktion und damit Drehmomentausübung auf das Abtriebselement möglich.

Das jeweils aktive, also beheizte, eine Kontraktionskraft erzeugende Zugelement überwindet hierbei in der Regel, z.B. vom oben erwähnten Haltemoment abgesehen, gleichzeitig die Dehnkraft des anderen nicht bestromten gegenläufigen Zugelements und streckt dieses auf die entsprechend erforderliche Länge, um die entsprechende Drehposition des Abtriebselements einzustellen.

Da die Zugelemente eine Zugkraft bei ihrer Kontraktion am Abtriebselement erzeugen, greifen vom ersten und zweitem Zugelement zwei Kräfte mit bestimmten Beträgen und Richtungen am Abtriebselement an. Diese beiden Kräfte können eine gemeinsame Richtungskomponente aufweisen, das heißt zwischen sich einen Winkel von kleiner als 180° einschließen.

Somit wirkt auf das Abtriebselement über die beiden Zugelemente sowohl bei deren Kontraktion als auch Dehnung als auch beim Halten eine Kraftkomponente auf das Abtriebselement in Richtung der gemeinsamen Richtungskomponente. Dies eröffnet viele konstruktive Möglichkeiten, z.B. in Verbindung mit einer Federlagerung entgegen der Richtungskomponente usw., wie weiter unten ausführlich beschrieben wird.

Insbesondere können erstes und zweites Zugelement parallel zueinander angeordnet sein. Die am Abtriebselement von den Zugelementen erzeugten Kräfte weisen dann als gemeinsame Richtungskomponente gleiche Richtung auf. Die gemeinsame Richtungskomponente der beiden Kräfte ist sodann auch die einzige Richtungskomponente der Summenkraft. Die parallele Anordnung der Zugelemente erlaubt eine besonders platzsparende Bauweise des Drehaktuators. Kräfte am Abtriebselement senkrecht zur gemeinsamen Kraftrichtung müssen von der Anordnung nicht aufgefangen werden.

Das Abtriebselement kann entgegen der gemeinsamen Richtungskomponente der an ihm erzeugten Kräfte federnd vorgespannt sein. Eine derartige Federlagerung entweder des Abtriebselements oder der Zugelemente bietet zunächst den Vorteil, dass je nach Auslegung der federnden Vorspannung bei Kontraktion des einen Zugelements nicht zwingenderweise das andere Zugelement gedehnt werden muss, sondern z.B. zunächst die federnde Lagerung des Abtriebselements den entsprechenden Längenausgleich im Drehaktuator übernimmt.

Alternativ oder zusätzlich kann, wie erwähnt, über die federnde Vorspannung z.B. das Abtriebselement von einem ortsfesten Bremsblock abgehoben werden, wenn an ihm durch die Zugelemente Kraft erzeugt wird und das Abtriebselement sich gegen seine federnde Vorspannung bewegt. Bei Abkühlung der Zugelemente und somit Nachlassen der von ihnen erzeugten Zugkraft drückt die federnde Vorspannung das Abtriebselement wieder gegen den Bremsblock. Der Drehaktuator kann also einen mit dem Abtriebselement zusammenwirkenden Bremsklotz aufweisen. Hierbei kann auch der Bremsklotz gegen das Abtriebselement angefahren werden. Durch den mit dem Abtriebselement zusammenwirkenden Bremsklotz kann z.B. eine Feststellbremse bzw. Art Rutschkupplung am Abtriebselement realisiert werden, welches dieses entweder fest oder bis zur Überschreitung einer gewissen Fremdkraft, die von außen am Abtriebselement einwirkt, in einer Drehstellung fixiert.

Neben der Möglichkeit, Bremsklotz oder Abtriebselement z.B. durch die oben genannte Federanordnung oder Motorantrieb aneinander anzufahren oder voneinander abzuheben, kann der Drehaktuator ein auf den Bremsklotz und / oder das Abtriebselement wirkendes drittes Zugelement enthalten. Der gesamte Drehaktuator weist somit lediglich Zugelemente zur Erzeugung von Kräften auf und benötigt für das Anfahren des Bremsklotzes relativ zum Abtriebselement keine andere Alternative zur Krafterzeugung. Natürlich ist es im Regelfall erwünscht, den Bremsklotz zu lösen, bevor eine Verstellung des Aktuators angestrebt wird.

Der Drehaktuator kann ein Gehäuse aufweisen, wobei die Drehachse fest am Gehäuse gelagert ist. Wie erwähnt, ist dies sinnvoll für einen z.B. verfahrbaren Bremsklotz oder dasjenige Bauprinzip des Drehaktuators, bei welchem eine Kontraktion des einen Zugelements zwingend die Dehnung eines anderen Zugelementes erfordert.

Alternativ hierzu kann die Drehachse in einer zu ihrer Axialrichtung senkrechten Richtung beweglich im Gehäuse gelagert sei. Diese Variante wurde bereits im Zusammenhang mit dem gehäusefesten Bremsblock erwähnt, von welchem z.B. das Abtriebselement bei Kontraktion eines der Zugelemente abgehoben wird. Auch ist diese Konstruktionsvariante z.B. für das federnd gelagerte Abtriebselement sinnvoll.

Aus der Kombination von bereits erläuterten Maßnahmen entsteht so ein Drehaktuator mit parallel zueinander verlaufendem erstem und zweitem Zugelement, die also jeweils am Abtriebselement Kräfte in gleicher Richtung erzeugen. Parallel zu den Zugelementen und damit zur gemeinsamen Richtungskomponente der von ihnen erzeugten Kräfte im Gehäuse verschiebbar ist das Abtriebselement gelagert und mit einer sich am Abtriebselement und dem Gehäuse abstützenden Federelement gegen die Zugkraft der Zugelemente und gegen einen gehäusefesten Bremsblock federnd vorgespannt. Das Abtriebselement liegt also in Ruhestellung am Bremsblock an, der ein Haltemoment sicherstellt. Bei Zug eines oder beider Zugelemente federt das Federelement ein und hebt das Abtriebselement vom Bremsblock, so dass es gedreht werden kann. Bei Nachlassen der Zugkraft fährt das Abtriebselement aufgrund der Federkraft wieder an den Bremsblock an.

Der Drehaktuator kann einen den Drehwinkelbereich des Abtriebselements begrenzenden Anschlag aufweisen. Die Zugelemente werden hierbei bei Einwirkung einer Fremdkraft bzw. Fremddrehmoment auf das Abtriebselement vor Überdehnung geschützt.

Oftmals werden Drehaktuatoren nur dazu benutzt, um einen Stellvorgang zwischen zwei Positionen, bzw. Endlagen durchzuführen. Für den Drehaktuator sind damit nur zwei unterschiedliche Winkelstellungen, also die Endlagen, von Interesse. Der erfindungsgemäße Drehaktuator kann daher so ausgeführt sein, dass er ein das Abtriebselement zu zwei alternativen Endlagen hin stabilisierendes Haltelement aufweist. Durch das Halteelement wird der Drehaktuator selbsthemmend ausgelegt, so dass er jeweils durch das Haltelement stabilisiert in den Endlagen verharrt, selbst wenn die SMA- bzw. Zugelemente nicht bestromt sind.

Im Gegensatz zur oben genannten Bremse, welche gezielt mechanisch an den Drehaktuator bzw. des Abtriebselements angefahren werden muss, um zu wirken, hat eine selbsthemmende Mechanik den Vorteil, den Drehaktuator selbsttätig in der jeweils angefahrenen Endlage zu stabilisieren. Die Bestromung der SMA-Drähte muss dann nur jeweils für den Übergang bzw. Zustandswechsel, also das Verbringen des Abtriebselements von der einen zur alternativen zweiten Endlage hin bestromt werden.

Das Haltelement kann ein in den Endlagen entlastetes (oder weniger gespanntes) und im Bereich zwischen den Endlagen (stärker) gespanntes Federelement sein. Aus der jeweiligen Endlage heraus muss der Drehaktuator bzw. das Abtriebselement also gegen das Federelement anarbeiten, was die selbsthemmende Funktion bzw. Arretierung des Abtriebselements in den Endlagen sicherstellt. Von der ersten zur zweiten Endlage wird das Federelement zunächst komprimiert, bis es an einem Totpunkt maximal komprimiert (gespannt) ist, sodann entspannt es sich zur zweiten Endlage hin allmählich wieder. Bereits nach Überwindung des Totpunktes kann so das bzw. Zugelement abgeschaltet, also nicht weiter bestromt werden, da das Federelement das Abtriebselement zur alternativen Endlage hin, nämlich durch Entspannung des Federelements, bewegt.

Das Federelement kann eine mit ihrem einen Ende am Abtriebselement und mit ihrem anderen Ende ortsfest außerhalb des Abtriebselements gelagerte Feder sein, wobei in einer Position des Abtriebselements zwischen den Endlagen die Drehachse des Abtriebselements, und erstes und zweites Ende der Feder auf einer Linie liegen. Dieser Zustand ist der oben genannte Totpunkt, an welchem das Federelement maximal gespannt ist. Die Anordnung der Totpunktposition bzw. des korrespondierenden Drehwinkels des Abtriebselements kann entweder symmetrisch zwischen den beiden Endlagen oder asymmetrisch gewählt sein, je nach Anwendungsfall. Eine entsprechend angebrachte Schraubendruckfeder als Federelement ist konstruktiv besonders einfach und kostengünstig in den Drehaktuator zu integrieren und wegen der Einfachheit besonders robust.

Um ein Zugelement von vor einer Überlastung zu schützen, ist bei einer weiteren bevorzugten Ausgestaltung vorgesehen, dass dieses mit einem Federelement verbunden ist, über das die bei der bestromungsbedingten Kontraktion eines Zugelements entstehende Kraft in einen gegenüber dem Zugelement ortsfesten Lagerpunkt ()eingeleitet wird. Dabei kann das Federelement so ausgelegt werden, dass es bei Überschreiten einer bestimmten Grenzkraft nachgibt, d.h. expandiert oder komprimiert und dadurch beispielsweise ein überlastungsbedingtes Reißen des Zugelements verhindert. Ein bevorzugte, weil einfach zu realisierende Ausgestaltung sieht vor, dass das Federelement jeweils mittel- oder unmittelbar einerseits mit dem Ende eines Zugelements verbunden ist und andererseits mit dem Lagerpunkt zusammenwirkt.

Ein besonders wirksamer Überlastungsschutz eines Zugelements wird durch einen Schalter erreicht, der mit dem Federelement derart in einer Wirkverbindung steht, dass er im Falle einer überlastungsbedingten Kompression oder Expansion des Federelements durch dieses betätigt und die Stromzufuhr zum Zugelement unterbrochen wird. Neben dem mechanischen Schutz eines Zugelements kann die in Rede stehende Ausgestaltung auch zur Detektion einer Überlastung bzw. eines die Überlastung hervorrufenden Fehlers in dem vom Drehaktuator betätigten Bauteil, beispielsweise einer Lüftungsklappe, verwendet werden. Im Falle einer Unterbrechung der Stromzufuhr zu einem Zugelement kann ein Warnsignal generiert und dadurch der Benutzer auf eine Störung aufmerksam gemacht werden.

Der oben beschriebene Überlastschutz kann nicht nur bei einem Drehaktuator der in dieser Anmeldung beschriebenen Art, sondern ganz allgemein für Aktuatoren oder sonstige Vorrichtungen verwendet werden, in denen beispielsweise drahtförmig ausgestaltete Zugelemente aus einer Formgedächtnislegierung eingesetzt werden.

Für eine weitere Beschreibung der Erfindung wird auf die Ausführungsbeispiele der Zeichnungen verwiesen. Es zeigen, jeweils in einer schematischen Prinzipskizze:
- Fig. 1: einen Drehaktuator mit einem drehbar gelagerten Stellelement und zwei Zugelementen in perspektivischer Darstellung,
- Fig. 2: eine alternative Ausführungsform eines drehbar und verschiebbar gelagerten Drehaktuators mit gehäusefestem Bremsblock in drei verschiedenen Betriebspositionen a),b) und c) im Querschnitt,
- Fig. 3: einen Drehaktuator gemäß Fig. 1 mit einem durch ein drittes Zugelement vom Stellelement abhebbaren Bremsblock in perspektivischer Darstellung,
- Fig. 4: und 5 ein Ausführungsbeispiel, bei dem ein Abtriebselement des Drehaktuators von einem Halteelement in zwei Endlagen stabilisiert ist,
- Fig. 6: einen Längsschnitt durch eine mit dem Ende eines Zugelements zusammenwirkende Überlastungsschutz-Einrichtung in einem ersten Betriebszustand,
- Fig. 7: eine Seitenansicht der Einrichtung von Fig. 6,
- Fig. 8: eine Überlastungsschutz-Einrichtung in einer Fig. 6 entsprechenden Abbildung, wobei sich die Einrichtung in einem zweiten Betriebszustand befindet,
- Fig. 9: eine Seitenansicht der Einrichtung von Fig. 8.

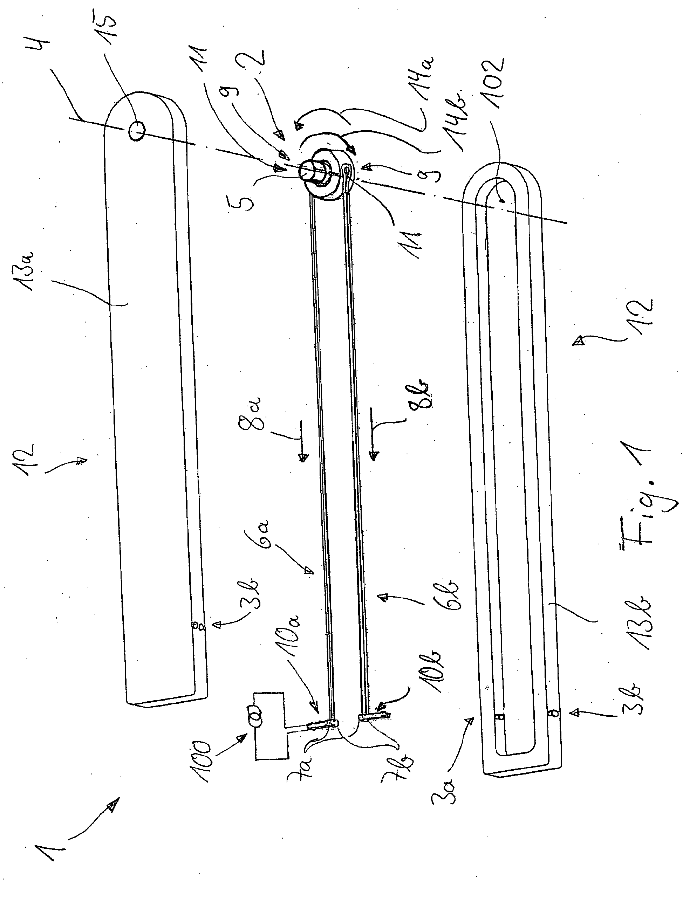

Fig. 1 zeigt einen Drehaktuator 1 mit einem Stellelement 2 und zwei SMA-Elementen 6a und 6b als Zugelementen. Das Stellelement 2 ist an einem Gehäuse 12, umfassend ein Oberteil 13a und ein Unterteil 13b, um eine Achse 4 drehbar gelagert. Eine axial aus dem Stellelement 2 ragende Abtriebsachse 5 dient zum Abtrieb des vom Stellelement 2 relativ zum Gehäuse 12 erzeugten Drehmoments. Hierzu ragt die Abtriebsachse im zusammengebauten Zustand des Drehaktuators 1 aus dem Oberteil 13a durch die Öffnung 15 heraus. Gleichzeitig dient die Öffnung 15 als Axialführung bzw. Drehlagerung des Abtriebselements 2. Axial gegen das Oberteil 13a gehalten wird das Abtriebselement 2 dabei von der Lagerfläche 102 im Unterteil 13b.

Die SMA-Elemente 6a und 6b sind Drähte aus einer Formgedächtnislegierung und verlaufen parallel zueinander. Die beiden jeweiligen Drahtenden 7a und 7b jedes SMA-Elements 6a,b sind jeweils über auch zur elektrischen Stromzuführung dienende Halterungen 10a,b am Gehäuse 12 befestigt. Hierzu sind die Halterungen 10a,b in Öffnungen 3a,b des Gehäuses 12 aufgenommen. Die Stromzuführung zum Bestromen der SMA-Elemente 6a,b ist symbolisch für das SMA-Element 6a durch den Stromkreis 100 dargestellt.

Etwa in der Mitte zwischen seinen Enden 7a und 7b ist jedes SMA-Element 6a,b, das hier durch einen Draht gebildet ist, in Form einer Schlinge 9 in einer geeigneten Öse 11 des Stellelements 2 gehalten.

Die beiden SMA-Elemente 6a,b sind voneinander elektrisch isoliert und somit getrennt mit elektrischem Strom vom jeweils einen Ende 7a zum anderen Ende 7b durchströmbar und somit getrennt erwärmbar bzw. abkühlbar.

Bei Bestromung erhitzen sich die SMA-Elemente 6a bzw. 6b und verkürzen sich. Die Schlinge 9 des jeweiligen SMA-Elements 6a,b bewegt sich dadurch auf die gehäusefesten Halterungen 10a bzw. 10b zu. Das Stellelement 2 erfährt dadurch über die Öse 11 eine Kraft in Richtung des Pfeils 8a bzw. 8b und dreht sich daraufhin wegen der Axiallagerung um die Achse 4 in Richtung der Pfeile 14a bzw. 14b.

Hinsichtlich ihrer Kontraktionswirkung sind die SMA-Elemente 6a,b bezüglich des Stellelements 2 gegensätzlich angeordnet. Beide SMA-Elemente 6a,b bewirken also eine entgegengesetzte Drehung des Stellelements 2 um die Achse 4 bei Kontraktion. Dies ist erreicht durch die bezüglich der Achse 4 diametral gegenüberliegenden Ösen 11. Eine Kontraktion des SMA-Elements 6a in Richtung des Pfeils 8a verkürzt dieses. Die entsprechende Schlinge 9 zieht in gleicher Richtung an der Öse 11 des Stellelements 2 und bewirkt damit dessen Drehung in Richtung des Pfeils 14a. Das SMA-Element 6b wird gleichzeitig entgegen der Richtung des Pfeils 8b gegen seine Eigen- bzw. Rückstellkraft wieder gedehnt. Somit kann durch wechselweise Erwärmung der beiden SMA-Elemente 6a,b das Stellelement 2 in beide Drehrichtungen 14a,b bewegt werden.

In der Regel wird, um eine Drehbewegung bzw. ein Drehmoment im Stellelement 2 zu erzeugen, nur ein SMA-Element 6a oder 6b bestromt. Die Kontraktion des SMA-Elements 6a,b findet hierbei z.B. kontinuierlich innerhalb eines Temperaturfensters statt. Somit kann über die Heiztemperatur der Grad dessen Kontraktion und somit die Position bzw. Drehstellung des Stellelements 2 bzw. die Größe des vom Stellelement 2 abgebbaren Drehmoments bestimmt werden. Die Heiztemperatur wiederum wird durch die Zuführung elektrischer Energie im bzw. zum SMA-Element 6a,b bestimmt.

Sowohl der verstellbare Winkelbereich des Stellelements 2 als auch das von ihm abgebbaren Drehmoment sind von der mechanischen Ausführung des Stellelements 2 bzw. der Hebelanordnung aus Stellelement 2 und SMA-Element 6a,b abhängig. Hier sind verschiedenste Geometrien, Drahtlängen, Übersetzungen etc. denkbar, um je nach benötigtem Stellwinkel entsprechende, auf eine bestimmte Anwendung optimierte Drehmomente an der Abtriebsachse 5 des Drehaktuators 1 bereit zu stellen.

Ist eine Positionserfassung, z.B. des momentanen Drehwinkels des Stellelements 2 erwünscht, so kann dies auf verschiedene Arten bewerkstelligt werden:

Erstens kann die Tatsache ausgenutzt werden, dass die Änderung der Länge des SMA-Elements 6a,b auf dessen absoluten elektrischen Widerstand wirkt. Durch Messung z.B. des Widerstands des SMA-Elements 6a zwischen den Stromzuführungen bzw. Halterungen 10a bzw. im Stromkreis 100 kann so dessen aktuelle Länge ermittelt und somit die Dreh- bzw. Aktuatorstellung des Stellelements 2 ermittelt werden, da ja die Geometrieverhältnisse im Drehaktuator 1 bekannt sind.

Zweitens kann eine direkte Winkelmessung am Stellelement 2 erfolgen. In Anlehnung an ein Potentiometer kann z.B. eine nicht dargestellte Widerstandbahn auf das als Umlenkrolle geformte Stellelement 2 aufgebracht werden, wobei die Widerstandsbahn mit Hilfe eines nicht dargestellten ortsfest am Gehäuse 12 ruhenden Schleifers kontaktiert wird. Der über den Schleifer gemessene Widerstand ist somit z.B. proportional zur Winkelposition des Stellelements 2.

Drittens kann z.B. durch Magnetisierung des Stellelements 2, oder durch Integration eines nicht dargestellten Magneten in diesem, und eine nicht dargestellte Hall-Sensorik eine berührungslose Positionsmessung erfolgen.

Weiterhin lassen sich im erfindungsgemäßen Drehaktuator Fremdkräfte ermitteln, d.h. z.B. Kräfte, die auf das Stellelement 2 von außen, also über die Abtriebsachse 5 einwirken. Tritt nämlich am SMA-Element 6a z.B. eine Zugbelastung auf, so ändert sich dessen elektrischer Widerstand. Diese Widerstandsänderung kann wieder über die Anschlussklemmen 10a detektiert werden. Anwendung findet eine derartige Messung z.B. bei der Erkennung einer Blockade des Stellelements 2 oder eines Schutzes des gesamten Drehaktuators 1 vor Überlastung.

Um in einer bestimmten Drehstellung des Stellelements 2 ein Haltemoment zu erzeugen, gibt es ebenfalls mehrere Möglichkeiten:

Erstens können beide SMA-Elemente 6a,b gleichzeitig bestromt werden, wodurch beide gleichzeitig zueinander entgegengesetzte Drehmomente am Stellelement 2 bewirken. Aus dem Kräftegleichgewicht in einer bestimmten Drehposition resultiert so ein Haltemoment für das Stellelement 2 gegen eine äußere Kraft bzw. ein äußeres Drehmoment.

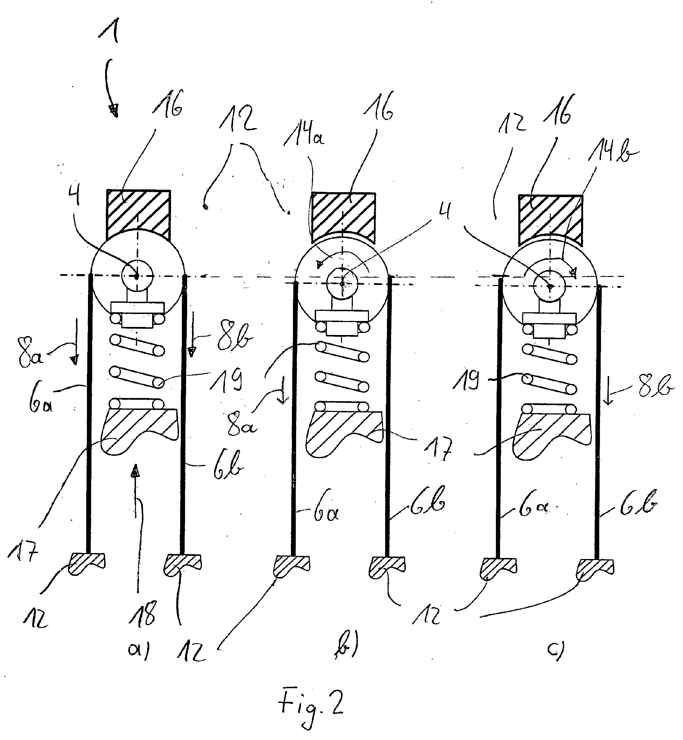

Zweitens kann gemäß Fig. 2 eine Arretierung bzw. Rutschkupplung durch einen an das Stellelement 2 angefahrenen Bremsblock 16 erreicht werden. In Fig. 2 ruht der Bremsblock 16 ortsfest, ist also am Gehäuse 12 befestigt. Das Stellelement 2 ist jedoch auf diesen zu und von diesem weg in Richtung des Pfeils 18 beweglich gelagert. Hierzu ist die Drehachse 4 relativ zum Gehäuse 12 beweglich in und entgegen der Richtung des Pfeils 18 gelagert. Das Stellelement 2 ist dabei auf den Bremsblock 16 hin, also in Richtung des Pfeils 18, durch eine sich am Gehäuse 12 bzw. dessen Steg 17 und dem Stellelement 2 abstützende Feder 19 vorgespannt. Die SMA-Elemente 6a,b erzeugen wie in Fig. 1 lineare Kräfte in Richtung der Pfeile 8a,b. So bewegen sie unter Komprimierung der Feder 19 bei Bedarf das Stellelement 2 vom Bremsblock 16 weg.

Fig. 2a zeigt den Drehaktuator 1 in Ruhe, das heißt ohne Zugbelastung durch die SMA-Elemente 6a,b. Die Feder 19 überwindet die Rückstellkräfte der SMA-Elemente 6a,b und dehnt diese auf die erforderliche Länge, um das Stellelement 2 in Richtung des Pfeils 18 gegen den Bremsblock 16 zu drücken. In Fig. 2b bzw. 2c sind jeweils das SMA-Element 6a bzw. 6b bestromt und damit in Richtung der Pfeile 8a bzw. 8b kontrahiert. So wird eine Links- bzw. Rechtsdrehung des Stellelements 2 in Richtung der Pfeile 14a bzw. 14b erreicht. Der Längenausgleich für die Kontraktion erfolgt hierbei durch Verschiebung der Achse 4 entgegen der Richtung des Pfeils 18. Gleichzeitig hebt damit das Stellelement 2 vom Bremsblock 16 ab und wird damit freigängig.

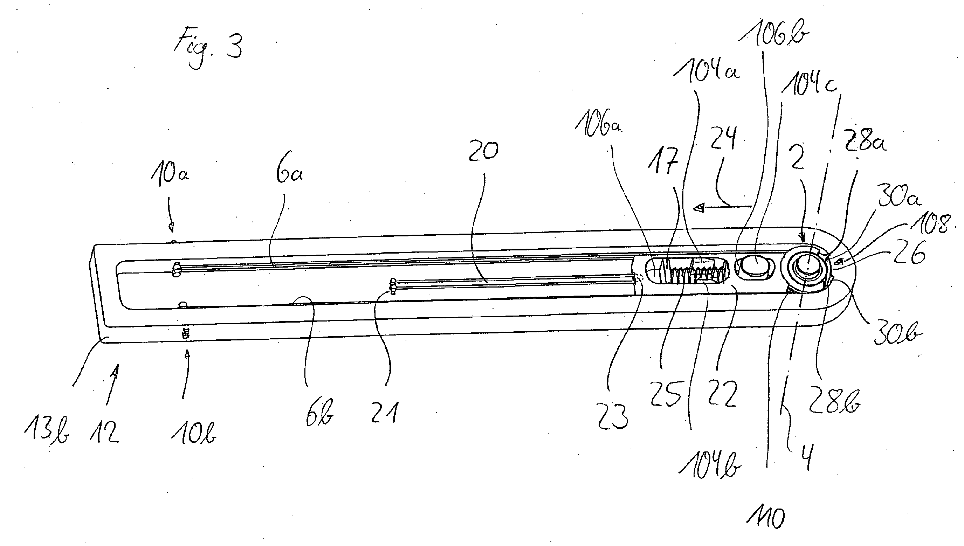

Das Abheben vom Bremsblock 16 wird in Fig. 2 durch das Zusammenspiel der beiden SMA-Elemente 6a,b und der Feder 19 bewirkt. In Fig. 3 hingegen wird hierzu ein drittes SMA-Element 20 benutzt, welches wieder durch eine entsprechende Stromzuführung und Halterung 21 am Gehäuse 12 endseitig befestigt ist. Wie bei den SMA-Elementen 6a,b durchsetzt eine Schlinge 23 auf etwa halber Länge des SMA-Elements 20 einen Schlitten 22. Der Schlitten 22 ist über gehäusefeste Führungszapfen 104a-c am Unterteil 13b des Gehäuses 12 so in entsprechenden Ausnehmungen 106a,b geführt, dass er sich nur in oder entgegen der Richtung des Pfeils 24 bewegen kann.

In Fig. 3 ist der Schlitten 22 als Bremsblock an das Stellelement 2 unter Federlast angefahren. Eine Feder 25 stützt sich hierzu an einem gehäusefesten Steg 17 und in der Ausnehmung 106a des Schlittens 22 und damit an diesem ab. Der Schlitten 22 ist in Richtung des Pfeils 24 relativ zum Gehäuse 12 verfahrbar und damit vom Stellelement 2 gegen die Kraft der Feder 25 abhebbar.

Durch Bestromung des SMA-Elements 20 wird dieses verkürzt, die Schlinge 23 zieht in Richtung des Pfeils 24 am Schlitten 22, der daher in Richtung des Pfeils 24 verfährt. Die Achse 4 des Stellelements 2 ist entsprechend Fig. 1 im Oberteil 13a gelagert, das in Fig. 3 nicht dargestellt ist, daher hebt der Schlitten 22 vom Stellelement 2 ab. Vor einer Drehbewegung des Stellelements 2 durch die beiden SMA-Elemente 6a,b ist also das dritte SMA-Element 20 derart anzusteuern, dass der Bremsblock in Form des Schlittens 22 gelöst wird, indem der Schlitten 22 in Richtung des Pfeils 24 vom Stellelement 2 weggefahren wird.

Dies kann alternativ in nicht dargestellter Weise auch bewirkt werden, wenn der SMA-Draht 20 elektrisch mit dem elektrisch leitenden Schlitten 22 verbunden ist und auch das Stellelement 2 elektrisch leitend ist. Wir dann ein elektrischer Strom vom Stellelement 2 über den Schlitten 22 zum SMA-Element 20 und über die Halterung 21 geführt, wird dieses nur dann bestromt, wenn der Schlitten 22 Kontakt zum Stellelement 2 hat. Bei Bestromung stellt sich so ein Gleichgewichtszustand ein, der den Schlitten 22 gerade derart vom Stellelement abhebt, dass dieses verdreht werden kann. Stellelement 2 und Schlitten 22 wirken also so nach Art eines automatischen elektrischen Schalters zusammen.

Eine Dimensionierung der SMA-Drähte 22 und 6a,b kann überdies ein automatisches Abheben des Schlittens 22 bewirken, bevor die SMA-Drähte 6a,b ihre Zugkraft entwickeln. Hierzu kann der SMA-Draht 20 mit kleinerem Durchmesser als die SMA-Drähte 6a,b ausgeführt werden. Werden beide Elemente dann vom gleichen Strom, z.B. in Reihenschaltung, durchströmt, erwärmt sich der SMA-Draht 20 schneller und verkürzt sich damit frühe als die SMA-Elemente 6a,b.

Im Gegensatz zur Ausführungsform nach Fig. 2 kann also der Drehaktuator 1 gemäß Fig. 3 im Ruhezustand, d.h. ohne Bestromung der SMA-Elemente 6a,b durch Einwirkung eines Fremddrehmoments von außen auf das Stellelement 2 bzw. dessen Abtriebsachse 5 innerhalb seines Arbeitsbereiches, d.h. des reversiblen Dehnbereiches der SMA-Elemente 6a,b fremdverstellt werden. Hierzu ist lediglich die Bremsanordnung, also der Schlitten 22, vom Stellelement 2 abzuheben.

Eine derartige Fremdverstellung hat keinen Einfluss auf die Verstellung des Aktuators 1 hinsichtlich seiner elektrischen Ansteuerung. Durch entsprechendes Anlegen definierter Ströme in den SMA-Elementen 6a,b wird die beabsichtigte Drehposition des Stellelements 2 wieder eingenommen.

Fig. 3 zeigt zusätzlich einen am Gehäuse 12 bzw. Unterteil 13b befestigten bzw. angeformten Anschlagblock 26, der den Drehwinkelbereich des Stellelements 2 um die Achse 4 mechanisch begrenzt. Die Begrenzung wird erreicht durch ein wechselweises Anfahren der Anschlagschultern 28a,b des Stellelements 2 gegen die Stirnseiten 30a,b des Anschlagblocks 26 bei Drehung des Stellelements 2. Die Anschlagschultern 28a,b sind durch eine radial einwärtige Aussparung 108 an der Umfangsfläche 110 des Stellelements 2 gebildet. Die Begrenzung des Drehwinkelbereiches schützt unter anderem die SMA-Elemente 6a,b vor Überdehnung bei Einwirken einer äußeren Kraft bzw. eines Drehmoments auf das Stellelement 2.

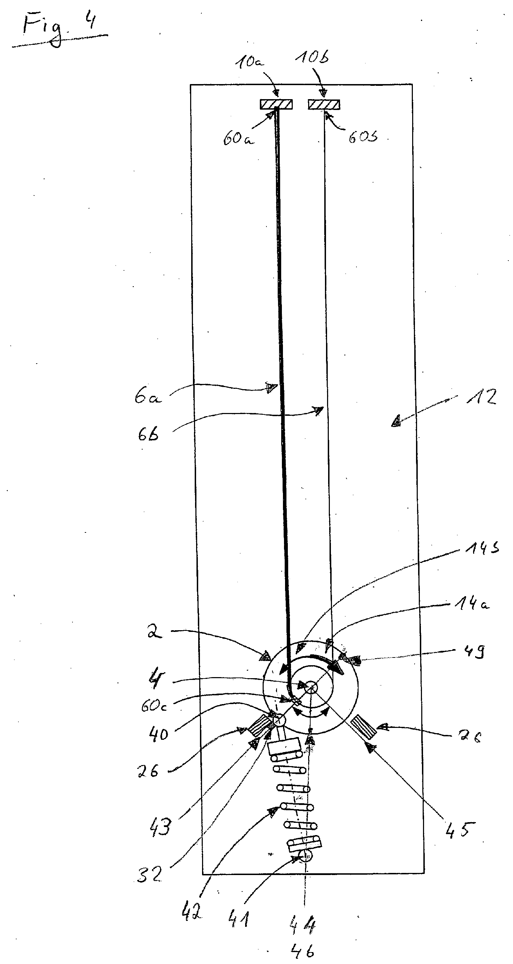

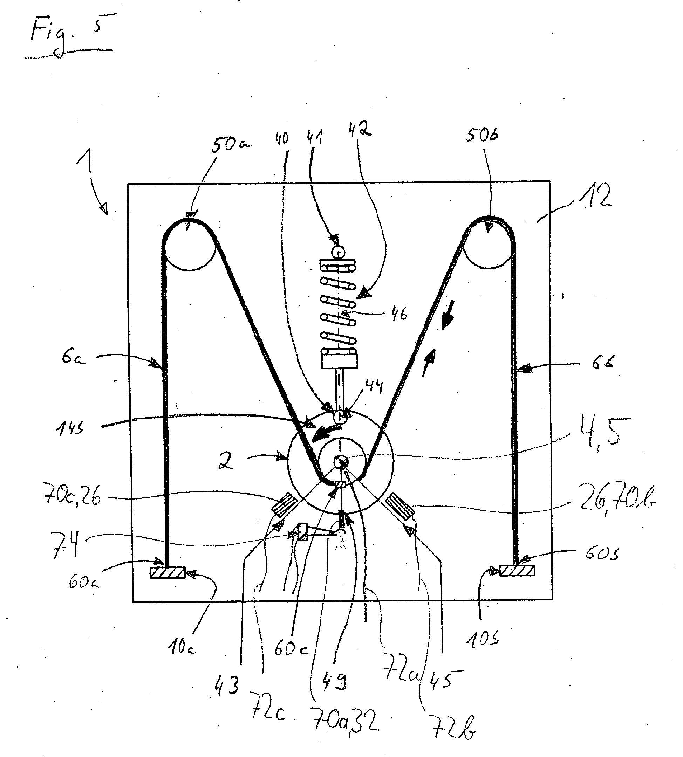

In Figuren 4 und 5 sind zwei weitere Ausführungen des Drehaktuators skizziert, bei denen das Stellelement nur zwischen zwei Endpositionen verstellt und dort fixiert werden kann.

Die Abbildungen zeigen jeweils einen Drehaktuator 1 mit zwei SMA-Drähten 6a/b, welche über drei elektrische Kontakte 60a,b,c bestromt werden können und einem Federelement, das z.B. eine als Schraubendruckfeder ausgeführte Stellfeder 42 ist. Der Drehwinkelbereich zwischen zwei Endpunkten 43, 45 des Stellelements 2 wird durch Anschlagblöcke 26 am Aktuatorgehäuse 12 und eine mit dieser zusammenwirkende Anschlagschulter 32 (in Fig. 5 nicht sichtbar) am Stellelement 2 vorgegeben. Das Stellelement 2 kann zwei Endlagen an den Endpunkten 43 und 45 einnehmen, in denen die Anschlagschulter 32 an einem Anschlagblock 26 anliegt. Die Stellfeder 42 ist mit ihrem einen Ende 40 an der Peripherie des Stellelements 2 und mit ihrem anderen Ende 41 am Gehäuse 12 des Drehaktuators 1 angelenkt. Das Ende 40 ist z.B. auf der Winkelhalbierenden 46 des Drehwinkelbereichs zwischen den Endpunkten 43 und 45 positioniert. Die Stellfeder 42 übt dann auf beide Endlagen die gleiche Haltekraft aus.

Bei dem Ausführungsbeispiel von Fig. 4 ist die Stellfeder 42 auf der den SMA-Drähten 6a,b abgewandten Seite des Stellelements 2 angeordnet. Zudem befindet sich das Stellelement 2 in der dargestellten Situation in der linken Endposition, also am Endpunkt 43, in der es von der Stellfeder 42 gehalten ist. Die Anschlagschulter 32 liegt dabei am linken Anschlagblock 26 an.

Um das Stellelement 2 in die rechte Endposition, also zum Endpunkt 45 zu bringen, wird der rechte SMA-Draht 6b zwischen den Kontakten 60b und 60c durch Bestromung kontrahiert, so dass die Summe der auf das Stellelement wirkenden Drehmomente sowohl eine Dehnung des linken SMA-Drahtes 6a als auch eine Auslenkung des Stellelements 1 entgegen der Wirkung der Stellfeder 42 in Richtung des Pfeils 14b zur rechten Endposition am Endpunkt 45 bewirken. Sobald der Lagerpunkt am Ende 40 der Stellfeder 42 am Stellelement 2 einen Totpunkt 44 überschritten hat, bewirkt das Drehmoment der Stellfeder 42 ebenfalls eine Drehung des Stellelements 2 in Richtung des Pfeils 14b zur rechten Endposition am Endpunkt 45 hin. Die Bestromung des SMA-Drahtes 6b kann spätestens dann beendet werden, wenn das Stellelement 2 den rechten Endpunkt 45 erreicht hat, an dem es auch ohne Bestromung der SMA-Drähte 6a,b durch die Kraft der Stellfeder 42 gehalten wird. Durch Bestromung des linken Drahtes 6a zwischen den Kontakten 60a und 60b kann das Stellelement 2 wieder zum linken Endpunkt 43 zurückverbracht werden.

In einer Anwendung des gezeigten Drehaktuators 1 kann das Stellelement 2 eine nicht dargestellte Vorrichtung, beispielsweise eine Klappe, mittels kurzer Bestromung der SMA-Elemente 6a,b zwischen zwei definierten Endpositionen bewegen und in jeder Endposition ohne Zuführung elektrischer Energie über die Kraftwirkung der Stellfeder 42 dauerhaft fixieren.

Die Fig. 5 zeigt einen Drehaktuator 1 vergleichbar zu dem in Fig. 4 dargestellten, dessen SMA-Elemente 6a,b jedoch über Umlenkrollen 50a,b geführt werden. Bei geringer Bauhöhe eines Aktuators können so trotzdem lange SMA-Elemente 6a,b mit einer hohen Kontraktionsfähigkeit verwendet werden. Die Stellfeder 42 ist zwischen den sich zwischen dem Stellelement 2 und den Umlenkrollen 50a,b erstreckenden Abschnitten der SMA-Drähte 6a,b angeordnet. In der dargestellten Situation befindet sich das Ende 40 zur Befestigung der Stellfeder 42 im Totpunkt 44 und die Stellfeder 42 bewirkt kein Drehmoment auf das Stellelement 2.

Alternativ zu den in den Figuren 4 und 5 dargestellten Ausführungen kann der Drehaktuator mit einer nicht dargestellten, als Schraubenzugfeder ausgelegten Stellfeder 42 entworfen werden. Hierfür ist das Ende 40 dieser Stellfeder 42 an einem diametral dem Befestigungspunkt aus Fig. 4 oder 5 auf der Peripherie des Stellelements 2 gegenüberliegenden Punkt 49 zu befestigen.

In Fig. 5 ist am Punkt 49 der Umfangsposition des Stellelements 2 ein elektrischer Kontakt 70a angebracht, welcher elektrisch mit einer Anschlussleitung 72a verbunden ist. Des Weiteren sind auch die Anschlagblöcke 26 als Kontakte 70b und c ausgeführt, welche ebenfalls mit Anschlussleitungen 72b und c versehen sind. Der Kontakt 70a bildet hierbei gleichzeitig die Anschlagschulter 32 zum Anschlag gegen die Anschlagblöcke 26 in den jeweiligen Endpunkten 43 und 45. Durch die Anschlussleitungen 72a und 72c kann so das Anliegen der Anschlagschulter 32 am Anschlagblock 26 am Endpunkt 43 erkannt werden. Hierdurch ist z.B. eine sicherheitstechnische Beschaltung des Drehaktuators 1 möglich, um das sichere Erreichen bzw. Verharren des Stellelements 2 am Endpunkt 43 elektrisch zu detektieren bzw. überwachen. Entsprechendes gilt für die Anschlussleitungen 72a und 72b am Endpunkt 45.

Zusätzlich ist es so möglich, die Zeit zwischen der Bestromung des SMA-Elements 6a und dem Abheben der Anschlagschulter 32 vom Anschlagblock 26 im Endpunkt 45 elektrisch zu ermitteln bzw. zu überwachen. Diese Zeitdifferenz gibt z.B. Auskunft über die Umgebungstemperatur des Drehaktuators 1, da diese mit der Temperaturdifferenz bei der Erwärmung des SMA-Elements 6a vom unbestromten Zustand bis zur Kontraktion einhergeht.

In Fig. 5 ist zusätzlich ein elektrischer Schalter 74 mit entsprechenden Anschlussleitungen so am Drehaktuator 1 bzw. dessen Gehäuse 12 montiert, das er in der Drehposition des Stellelements 2 am Totpunkt 44, wie in Fig. 5 gezeigt, durch die Anschlagschulter 32 geschlossen ist. In jeder anderen Drehposition des Stellelements 2 ist der Schalter 74 geöffnet. Durch den Schalter 74 ist es so möglich, das Passieren des Totpunkts 44 durch das Stellelement 2 beim Wechsel zwischen den Endpunkten 43 und 45 zu überwachen. Ausgehend z.B. vom Endpunkt 43 muss zunächst das SMA-Element 6b bestromt werden, um gegen die Kraft der Stellfeder 42, also deren Komprimierung zu arbeiten. Ist der Totpunkt 44 jedoch überschritten, was durch Schließen und anschließendes Öffnen des Schalters 74 angezeigt ist, so kann die Bestromung des SMA-Elements 6b eingestellt werden, da sich die Stellfeder 42 dann bereits wieder entspannt bzw. deren Federkraft ausreicht, um das Stellelement 2 zum Endpunkt 45 weiter zu bewegen und dort mechanisch zu fixieren.

Generell kann jeder Aktuator, so auch der Drehaktuator 1 aus Fig. 5, derart eingesetzt werden, dass dieser sowohl elektrisch, d.h. über die SMA-Elemente 6a,b, als auch händisch, nämlich z.B. durch äußeren Angriff an der Abtriebsachse 5 mechanisch betätigt wird, ohne also die SMA-Elemente 6a,b zu bestromen und durch diese Kraft auf den Drehaktuator auszuüben. Auch in diesem Fall dienen die Anschlagblöcke 26 als Begrenzung für die Endlagen des Drehaktuators 1. Dass nach manueller Verstellung des Drehaktuators 1 zu beiden Endpunkten 43 und 45 hin, ohne zwischendurch die SMA-Elemente 6a,b zu bestromen, diese beide gedehnt sind und somit zumindest eines nicht mehr gespannt ist, in der in Fig. 5 dargestellten Situation z.B. das SMA-Element 6b, ist hierbei nicht hinderlich. Der Drehaktuator 1 ist so konstruiert, dass, auch wenn beide SMA-Elemente 6a,b gleichzeitig gedehnt sind, diese sich weder berühren noch verhaken oder z.B. am Gehäuse anschlagen können. Sobald anschließend zumindest einer der SMA-Drähte 6a,b wieder bestromt wird, tritt ein automatisches Spannen beider Drähte ein, wie oben beschrieben.

Die elektrische Sensorik in Verbindung mit den Anschlagblöcken 26, also Benutzung der Kontakte 70b,c, ist auch für die manuelle Verstellung des Drehaktuators 1 sinnvoll. So kann, wie oben beschrieben, die jeweilige Stellung des Drehaktuators 1 in den Endpunkten 43 und 45 sicher detektiert werden. Außerdem ist z.B. in dem Fall, in welchem keiner der Kontakte 70b,c ein Signal liefert, davon auszugehen, dass gerade eine manuelle Betätigung des Drehaktuators 1 von außen über die Abtriebsachse 5 erfolgt. Eine Bestromung der SMA-Elemente 6a,b kann sodann unterbunden werden, um z.B. im schlimmsten Fall eine gegensinnige manuelle und elektrische Betätigung des Drehaktuators zu vermeiden und diesen somit vor Schaden zu schützen.

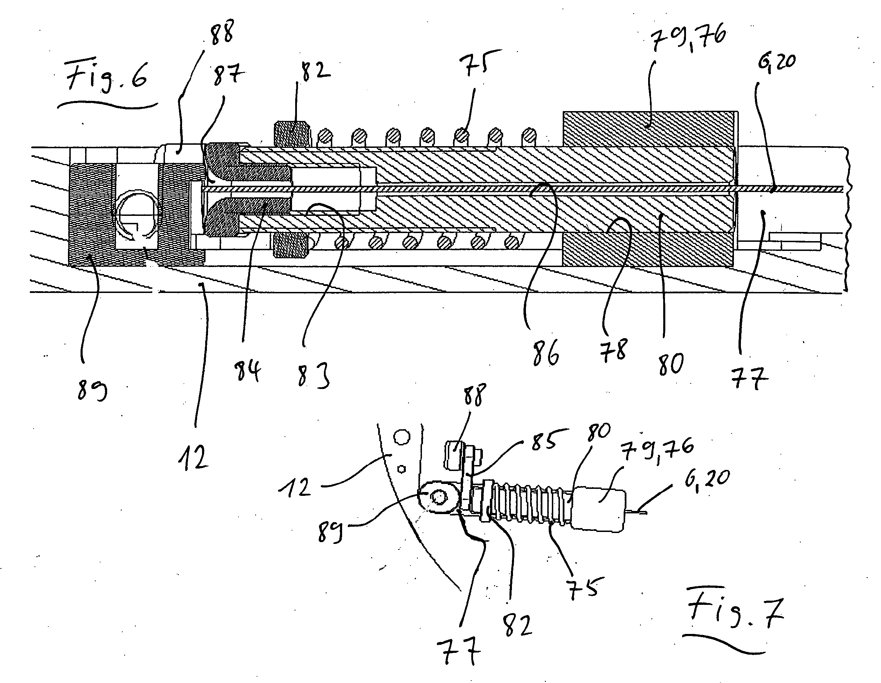

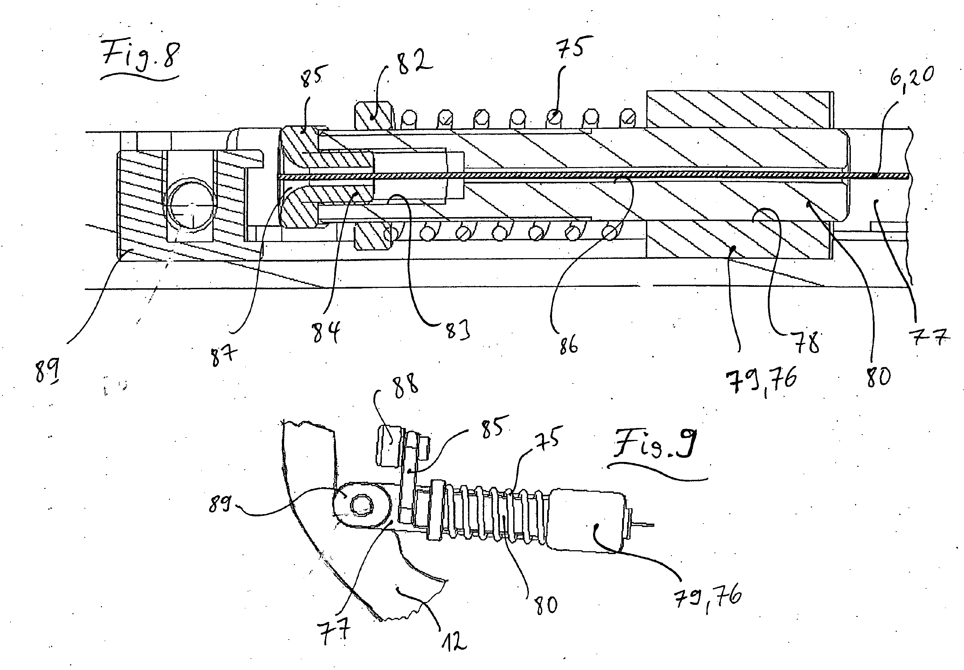

Die Abbildungen gemäß Fig. 6-8 zeigen eine Überlastungsschutz-einrichtung für ein Zugelement 6, 20. Die Einrichtung umfasst ein Federelement, nämlich eine Schraubendruckfeder 75, über die die vom Zugelement 6,20 im bestromten Zustand ausgeübte Kraft in einen ortsfest am Gehäuse 12 bzw. ortsfest gegenüber dem Zugelement angeordneten Lagerpunkt 76 eingeleitet werden. Der Lagerpunkt 76 ist von einer am Gehäuse 12 fixierten Anschlaghülse 79 gebildet, die von einer Durchgangsbohrung 78 durchsetzt ist. In der Durchgangsbohrung 78 ist ein elektrische nicht leitender Bolzen 80 mit seinem einen Ende verschiebbar gelagert. An seinem anderen Ende ist der Bolzen 80 von einer Einstellschraube 82 umgriffen. Weiterhin ist der Bolzen 80 von der Schraubendruckfeder 75 umfasst, wobei sich diese mit ihrem einen Ende stirnseitig an der Anschlaghülse 79 bzw. dem Lagerpunkt 76 und mit ihrem anderen Ende stirnseitig an der Einstellschraube 82 abstützt. Mit Hilfe der Einstellschraube 82 ist die Vorspannung der Schraubendruckfeder 75 einstellbar. In dem die Einstellschraube 82 tragenden Ende des Bolzens 80 ist stirnseitig eine Ausnehmung 83 vorhanden, in die ein Einsatz 84 eingeschraubt ist. Der Einsatz 84 trägt an seinem aus der Ausnehmung 83 herausragenden Ende einen Ausleger 85, der sich etwa rechtwinklig zum Bolzen 80 erstreckt. Der Bolzen 80 sowie der Einsatz 84 sind von einer zentralen Bohrung 86 durchsetzt, in der das Zugelement 6, 20 eingeführt ist. Auf der Seite des Einsatzes 84 mündet die Bohrung 86 mit einer sich trichterförmig erweiternden Öffnung 87 aus. Das Zugelement 6, 20 ist aus der Öffnung 87 heraus und auf der dem Bolzen 80 abgewandten Seite des Auslegers 85 bis zu dessen Freiende geführt. Dort ist es mit einem in den Ausleger 85 eingeschraubten Klemmelement 88 fixiert. Auf Grund der trichterförmigen abgerundeten Öffnung 87 ist ein scharfer Knick des Zugelementes 6, 20 vermieden. Im Bereich des von der Anschlaghülse 79 wegweisenden Ende des Bolzens 80 ist ein Kontaktelement 89 vorhanden, dass über eine (nicht dargestellte) elektrische Leitung an einen zur Bestromung des Zugelementes 6,20 dienenden Stromkreis angeschlossen. Der Ausleger 85, zumindest dessen die Öffnung 87 aufweisender Bereich ist aus elektrisch leitendem Material und wirkt mit dem Kontaktelement 89 als Gegenkontakt zusammen. Bei nicht bestromtem Zugelement 6,20 liegen Kontaktelement 89 und Gegenkontakt 90 aneinander an, so dass das Zugelement 6,20 außer dessen sich von der Öffnung 87 zum Klemmelement 88 erstreckender Abschnitt, von Strom durchflossen ist. Die Vorspannung der Schraubendruchfeder 75 ist mit Hilfe der Einstellschraube 82 so eingestellt, dass sie erst bei einer bestimmten Grenzkraft, welche das Zugelement auf sie ausübt, komprimiert wird. Die genannte Grenzkraft ist so gewählt, dass im normalen Betrieb, z.B. bei der Betätigung einer Belüftungsklappe, der durch Gegenkontakt 90 und Kontaktelement 89 gebildete Schalter geschlossen bleibt. Im Falle einer Überlastung, beispielsweise wenn die erwähnte Lüftungsklappe blockiert ist, kann die vom Zugelement ausgeübte Kraft die Grenzkraft übersteigen, so dass die Schraubendruckfeder 75 komprimiert und der Schalter geöffnet wird. Die Bestromung des Zugelementes 6,20 ist dann unterbrochen. Das Zugelement 6,20 kühlt sich dann ab und wird durch die Druckfeder 75 wieder gelängt, so dass sich der Schalter wieder schließt.

## Patentansprüche

1. Drehaktuator (1) mit einem um eine Drehachse (4) drehbar gelagerten Abtriebselement (2) und mit mindestens einem ersten (6a) und zweiten (6b) am Abtriebselement (2) angreifenden, sich bei einer Bestromung kontrahierenden Zugelement aus einer Formgedächtnislegierung, wobei die vom ersten (6a) und zweiten (6b) Zugelement am Abtriebselement (2) bei ihrer Kontraktion (8a,b) erzeugten Drehmomente entgegengesetzte Drehrichtungen (14a,b) bezüglich der Drehachse (4) aufweisen.

2. Drehaktuator (1) nach Anspruch 1, bei dem die Richtungen (8a,b) der vom ersten (6a) und zweiten (6b) Zugelement bei deren Kontraktion am Abtriebselement erzeugten Kräfte eine gemeinsame Richtungskomponente aufweisen.

3. Drehaktuator (1) nach Anspruch 2, bei dem erstes (6a) und zweites (6b) Zugelement parallel zueinander angeordnet sind, und die erzeugten Kräfte gleiche Richtung (8a,b) aufweisen.

4. Drehaktuator (1) nach Anspruch 2 oder 3, bei dem das Abtriebselement (2) entgegen der gemeinsamen Richtungskomponente (18) der an ihm erzeugten Kräfte federnd vorgespannt ist.

5. Drehaktuator (1) nach einem der vorhergehenden Ansprüche, mit einem mit dem Abtriebselement (2) zusammenwirkenden Bremsklotz (16,22).

6. Drehaktuator nach Anspruch 5, mit einem auf den Bremsklotz (16,22) und/oder das Abtriebselement (2) wirkenden dritten Zugelement (20).

7. Drehaktuator (1) nach einem der vorhergehenden Ansprüche, mit einem Gehäuse (12), wobei die Drehachse (4) fest am Gehäuse (12) gelagert ist.

8. Drehaktuator (1) nach einem der Ansprüche 1 bis 6, mit einem Gehäuse (12), wobei die Drehachse (4) in einer zu ihrer Axialrichtung (4) senkrechten Richtung (18) beweglich im Gehäuse (12) gelagert ist.

9. Drehaktuator (1) nach Anspruch 8, mit parallel zueinander verlaufendem erstem (6a) und zweitem (6b) Zugelement, mit parallel zu den Zugelementen im Gehäuse (12) verschiebbar (18) gelagertem Abtriebselement (2), mit einer sich am Abtriebselement (2) und dem Gehäuse (12) abstützenden, das Abtriebselement (2) gegen die Zugkraft (8a,b) der Zugelemente (6a,b) und gegen einen gehäusefesten Bremsblock (16) vorspannenden Federelement (19).

10. Drehaktuator (1) nach einem der vorhergehenden Ansprüche, mit einem den Drehwinkelbereich des Abtriebselements (2) begrenzenden Anschlag (26).

11. Drehaktuator (1) nach einem der vorhergehenden Ansprüche, mit einem das Abtriebselement (2) zu zwei alternativen Endlagen (43,45) hin stabilisierenden Halteelement.

12. Drehaktuator (1) nach Anspruch 11, bei dem das Halteelement (42) ein in den Endlagen (43,45) entlastetes und im Bereich zwischen den Endlagen (43,45) gespanntes Federelement (42) ist.

13. Drehaktuator (1) nach Anspruch 12, bei dem das Federelement (42) eine mit ihrem einen Ende (40) am Abtriebselement (2) und mit ihrem anderen Ende (41) ortsfest (12) außerhalb des Abtriebselements (2) gelagerte Schraubendruckfeder ist, wobei in einer Position (46) des Abtriebselements (2) zwischen den Endlagen (43,45) dessen Drehachse (4) und erstes (40) und zweites (41) Ende der Schraubendruckfeder auf einer Linie (46) liegen.

14. Drehaktuator nach einem der vorhergehenden Ansprüche, bei dem ein Zugelement (6a, 6b, 20) mit einem Federelement verbunden ist, über das die bei der Kontraktion eines Zugelements entstehende Kraft in einen gegenüber dem Zugelement ortsfesten Lagerpunkt (76) eingeleitet wird.

15. Drehaktuator nach Anspruch 14, bei dem das Federelement jeweils mittel- oder unmittelbar einerseits mit dem Ende eines Zugelements (6a,6b,20) verbunden ist und andererseits mit dem Lagerpunkt (76) zusammenwirkt.

16. Drehaktuator nach Anspruch 14 oder 15, bei dem ein Schalter vorhanden ist, der mit dem Federelement derart in einer Wirkverbindung steht, dass er im Falle einer überlastungsbedingten Kompression oder Expansion des Federelements durch dieses betätigt und die Stromzufuhr zum Zugelement unterbrochen wird.
